# DEMANDE DE BREVET EUROPEEN

(11) **EP 4 838 498 A1**
(43) Date de publication de la demande: **11.11.2026**
(21) Numéro de dépôt: 26174201.9
(22) Date de dépôt: 23.04.2026
(51) Int. Cl.: G08G 1/01, G01C 21/30, G01C 21/36, G06V 20/58, G08G 1/056, G08G 1/0962, G08G 1/16

(54) **PROCÉDÉ DE DÉTECTION D'UN ÉTAT DE CIRCULATION À CONTRESENS**

(30) Priorité: 07.05.2025 FR 2504885
(71) Demandeur: RENAULT s.a.s., 92100 Boulogne-Billancourt (FR)
(72) Inventeur: LE-MEUR, Emmanuel, 06410 BIOT (FR)
(74) Mandataire: Renault Group

(57) **Abrégé**

Procédé de détection d'un état de circulation à contresens d'un véhicule (1) automobile, le véhicule comprenant :
- un moyen d'observation (2) de l'environnement,
- un moyen de géolocalisation (3) apte à fournir des coordonnées géographiques représentatives d'une position courante du véhicule, et
- un module de positionnement (66) configuré pour calculer une position estimée du véhicule par projection de coordonnées géographiques fournies par le moyen de géolocalisation (3) sur des données cartographiques en supposant que le véhicule circule sur une chaussée et selon un sens de circulation correct,
le procédé de détection comprenant une première étape (E1) de qualification d'une configuration routière courante parmi un ensemble de configurations routières potentielles, puis l'application de différents tests en fonction de la configuration routière courante précédemment qualifiée.

## Description

### Domaine Technique de l'invention

L'invention concerne un procédé de détection d'un état de circulation à contresens d'un véhicule automobile. L'invention porte aussi sur un véhicule automobile comprenant des moyens matériels et logiciels adaptés pour mettre en œuvre un tel procédé de détection.

### Etat de la technique antérieure

La circulation d'un véhicule automobile à contresens expose ce véhicule à un risque de choc frontal très violent avec un autre véhicule, et pose donc un problème de sécurité majeur. Afin d'améliorer la sécurité des véhicules automobile, on cherche à détecter de manière la plus fiable possible un état de circulation à contresens.

Lors de la mise en œuvre d'un procédé de détection d'un état de circulation à contresens, il existe généralement quatre issues possibles, dites « vrai positif », « faux positif », « vrai négatif » et « faux négatif ». Un « vrai positif » correspond à une détection à juste titre d'un état de circulation à contresens. Un « vrai négatif » correspond à une détection à juste titre d'une absence de circulation à contresens. Un « faux positif » correspond à une détection à tort d'un état de circulation à contresens. Une telle détection occasionne une alerte injustifiée pouvant générer une situation de stress et devrait donc être évitée autant que possible. Un « faux négatif » correspond à une absence de détection d'un état avéré de circulation à contresens. Une telle absence détection peut avoir des conséquences dramatiques et doit donc être évitée avec le plus haut niveau de fiabilité possible.

Les véhicules modernes comprennent des moyens de géolocalisation par satellite, qui fournissent des données de positionnement du véhicule. Cependant, ces données de positionnement ont une précision insuffisante, et qui varie en fonction des conditions de propagation des signaux et de la visibilité des satellites. Ainsi, **il** est impossible de s'appuyer sur les données de positionnement fournies par les moyens de géolocalisation par satellite seuls pour détecter un état de circulation à contresens du véhicule, puisque le manque de précision des données de géolocalisation donnerait lieu à de nombreux faux positifs et négatifs.

Pour pallier cette imprécision, les véhicules comprennent également un système de positionnement, configuré pour déterminer une position précise du véhicule en utilisant les données de géolocalisation par satellite, éventuellement des données de localisation fournies par une centrale inertielle ou tout type de capteur de déplacement interne au véhicule (vitesse des roues, angle de direction...), et des données cartographiques. Parmi les traitements réalisés par le système de positionnement figure systématiquement un traitement dit de « map matching » (ou correspondance cartographique en français), qui positionne le véhicule sur le segment de route le plus proche de sa position courante dans le sens de circulation effectif du véhicule pour réduire les erreurs de positionnement. Par définition, détecter un état de circulation à contresens du véhicule en utilisant les données de positionnement fournies par le système de positionnement est alors également impossible.

Pour détecter un état de circulation à contresens, on connait un procédé basé sur l'utilisation de caméras appartenant à l'infrastructure routière. Ces caméras sont couplées avec des modules de traitement d'images adaptés pour identifier automatiquement un véhicule circulant à contresens. Un tel procédé ne permet pas de signaler efficacement et rapidement l'état de circulation à contresens aux véhicules concernés. En effet, une telle signalisation requerrait des moyens communication entre lesdits véhicule et l'infrastructure routière. De plus, de nombreuses caméras devraient être déployées pour surveiller efficacement un réseau routier. Ce procédé est donc particulièrement complexe à mettre en œuvre et/ou insuffisamment efficace.

On connaît également, un procédé de détection basé sur la reconnaissance optique de panneau de sens interdit avec un moyen d'observation embarqué dans le véhicule.

Un tel procédé entraîne un grand nombre de « faux positifs », car il arrive fréquemment qu'un panneau de sens interdit reste observable par un moyen d'observation alors qu'il concerne des automobilistes situés sur d'autres routes ou d'autres chaussées que celle sur laquelle circule le véhicule.

### Présentation de l'invention

Le but de l'invention est de fournir un procédé de détection d'un état de circulation à contresens d'un véhicule automobile remédiant aux inconvénients ci-dessus et améliorant les procédés de détection connus de l'art antérieur.

Plus précisément, un premier objet de l'invention est de fournir un procédé de détection d'un état de circulation à contresens particulièrement robuste et simple à mettre en œuvre.

### Résumé de l'invention

L'invention se rapporte à un procédé de détection d'un état de circulation à contresens d'un véhicule automobile, le véhicule comprenant :
- un moyen d'observation de l'environnement,
- un moyen de géolocalisation apte à fournir des coordonnées géographiques représentatives d'une position courante du véhicule, et
- un module de positionnement configuré pour calculer une position estimée du véhicule par projection de coordonnées géographiques fournies par le moyen de géolocalisation sur des données cartographiques en supposant que le véhicule circule sur une chaussée et selon un sens de circulation correct.

Le procédé de détection comprend une première étape de qualification d'une configuration routière courante parmi un ensemble de configurations routières potentielles, l'ensemble des configurations routières potentielles comprenant une configuration routière simple et une configuration routière complexe.

Ensuite si la configuration routière courante est qualifiée comme une configuration routière simple, le procédé de détection comprend :
- une deuxième étape de contrôle de cohérence entre d'une part des premiers repères identifiés avec le moyen d'observation, et d'autre part des seconds repères répertoriés dans des données cartographiques autour de la position estimée du véhicule, et
- une troisième étape de contrôle de la présence d'un premier panneau de sens interdit et d'un deuxième panneau de sens interdit de part et d'autre d'une chaussée sur laquelle circule le véhicule avec le moyen d'observation de l'environnement embarqué dans le véhicule.

Ensuite, si une incohérence entre les premiers repères et les seconds repères est détectée ou si la présence d'un premier panneau de sens interdit et d'un deuxième panneau de sens interdit de part et d'autre d'une chaussée sur laquelle circule le véhicule est détectée, le procédé de détection comprend une quatrième étape de signalisation d'un état de circulation à contresens.

Si la configuration routière courante est qualifiée comme une configuration routière complexe, le procédé de détection comprend :
- une cinquième étape de détermination d'une chaussée la plus proche de coordonnées géographiques fournies par le moyen de géolocalisation, puis une sixième étape de contrôle de cohérence entre d'une part un sens de circulation théorique de ladite chaussée, le sens de circulation théorique étant répertorié dans les données cartographiques, et d'autre part un sens de circulation effectif du véhicule, et
- une septième étape de contrôle de la présence d'un premier panneau de sens interdit et d'un deuxième panneau de sens interdit de part et d'autre d'une chaussée sur laquelle circule le véhicule avec le moyen d'observation de l'environnement embarqué dans le véhicule.

Ensuite, si une incohérence entre le sens de circulation théorique et le sens de circulation effectif est détectée ou si la présence d'un premier panneau de sens interdit et d'un deuxième panneau de sens interdit de part et d'autre de la chaussée sur laquelle circule le véhicule est détectée, une huitième étape de signalisation d'un état de circulation à contresens.

La première étape peut comprendre :
- une étape de détermination d'une position courante du véhicule à partir des données fournies par le moyen de géolocalisation,
- puis une étape de projection de la position courante sur les données cartographiques, les données cartographiques comprenant un premier ensemble de zones géographiques prédéfinies correspondant à des configurations routières simples et un deuxième ensemble de zones géographiques prédéfinies correspondant à des configurations routières complexes, le deuxième ensemble de zones géographiques étant distinct du premier ensemble de zones géographiques,
la configuration routière courante étant qualifiée comme une configuration routière simple si la position courante appartient au premier ensemble de zones géographiques et la configuration routière courante étant qualifiée comme une configuration routière complexe si la position courante appartient au deuxième ensemble de zones géographiques.

La première étape peut comprendre une étape de détermination de la configuration routière courante avec ledit moyen d'observation de l'environnement embarqué dans le véhicule.

La configuration routière courante peut être qualifiée comme un configuration routière simple si et seulement si une zone prédéfinie autour du véhicule comprend une unique route à sens unique ou à double sens. La configuration routière courante peut être qualifiée comme un configuration routière complexe seulement si une zone prédéfinie autour du véhicule comprend au moins une première route à sens unique ou à double sens et une deuxième route à sens unique ou à double sens, la deuxième route étant distincte de la première route.

Lesdits premiers repères peuvent comprendre des panneaux de signalisation, et/ou des bâtiments, et/ou des éléments d'accotement tels que des lignes de démarcation, des rambardes, des glissières ou des terrepleins.

Ladite deuxième étape peut comprendre :
- une étape d'identification d'au moins un premier repère avec le moyen d'observation de l'environnement embarqués dans le véhicule, puis
- une étape d'identification d'au moins un second repère avec les données cartographiques, puis
- une étape de calcul d'un score d'incohérence, le score d'incohérence étant incrémenté à chaque fois qu'une incohérence entre lesdits premiers repères et lesdits seconds repères est détectée, et décrémenté progressivement avec le temps,
la quatrième étape de signalisation d'un état de circulation à contresens étant exécutée dès que le score d'incohérence dépasse un seuil prédéfini.

La cinquième étape peut comprendre la détermination de premières coordonnées géographiques du véhicule avec le moyen de géolocalisation, puis la détermination d'au moins deuxièmes coordonnées géographiques du véhicule avec le moyen de géolocalisation, puis la détermination de la chaussée la plus proche en fonction des premières coordonnées géographiques et des au moins deuxièmes coordonnées géographiques.

L'ensemble des configurations routières potentielles peut comprendre une configuration urbaine, et tant que la configuration routière courante est qualifiée comme une configuration urbaine, le procédé de détection peut être réinitialisé.

Le procédé de détection peut comprendre en outre une étape de contrôle de la présence d'un marquage au sol indiquant un état de circulation à contresens avec le moyen d'observation de l'environnement embarqué dans le véhicule, puis si un marquage au sol indiquant un état de circulation à contresens est détecté, une étape de signalisation d'un état de circulation à contresens.

L'invention se rapporte également à un véhicule automobile comprenant :
- un moyen d'observation de l'environnement
- un moyen de géolocalisation, et
- une unité de contrôle électronique comprenant des moyens matériels et logiciels adaptés pour mettre en œuvre un procédé de détection tel que défini précédemment.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une vue schématique d'un véhicule automobile selon un mode de réalisation de l'invention.
La figure 2 est une représentation graphique de données cartographiques enregistrées dans une mémoire d'une unité de contrôle électronique du véhicule.
La figure 3 est un logigramme d'un procédé de détection d'un état de circulation à contresens selon un mode de réalisation de l'invention.
La figure 4 est une première image capturée par un moyen d'observation de l'environnement embarqué dans le véhicule lors d'un premier exemple de mise en œuvre du procédé de détection.
La figure 5 est une deuxième image capturée par un moyen d'observation de l'environnement embarqué dans le véhicule lors d'un deuxième exemple de mise en œuvre du procédé de détection.
La figure 6 est une première représentation graphique d'un nœud autoroutier, un premier ensemble de positions successives du véhicule étant superposé à la première représentation graphique.
La figure 7 est une deuxième représentation graphique du même nœud autoroutier que sur la figure 6, un deuxième ensemble de positions successives du véhicule étant superposé à la deuxième représentation graphique.

### Description détaillée

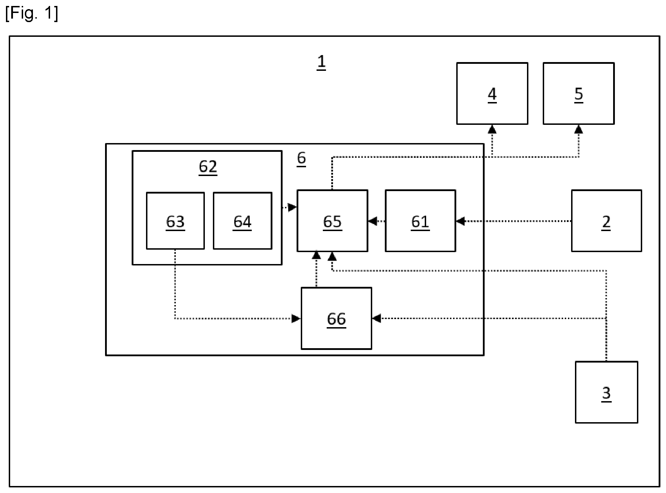

La figure 1 illustre schématiquement un véhicule 1 automobile selon un mode de réalisation de l'invention. Le véhicule 1 peut être, par exemple, un véhicule particulier, un véhicule utilitaire, un camion, une moto ou même un bus.

Le véhicule 1 comprend un moyen d'observation 2 de l'environnement du véhicule. Le moyen d'observation 2 est configuré pour observer une scène à l'avant du véhicule. Le moyen d'observation 2 est apte à fournir de manière instantanée ou quasi-instantanée un flux d'informations successives, représentatives de l'environnement du véhicule. Le moyen d'observation 2 peut comprendre une caméra, notamment une caméra optique dont le champ de vision est orienté vers l'avant du véhicule. Alternativement ou en complément, le moyen d'observation 2 peut comprendre un radar, et/ou un lidar, et/ou une caméra infrarouge.

Le véhicule 1 comprend également un moyen de géolocalisation 3 par satellite. Le moyen de géolocalisation 3 est configuré pour fournir une donnée numérique représentative d'une position courante du véhicule. En particulier, le moyen de géolocalisation 3 est apte à fournir de manière instantanée ou quasi-instantanée des coordonnées géographiques représentatives de la position courante du véhicule. Le moyen de géolocalisation 3 peut être de type « Global Navigation Satellite System » (GNSS) et/ou « Global Positioning System » (GPS) ou équivalent : il peut être configuré pour réceptionner des signaux émis par des satellites, et pour calculer lesdites coordonnées géographiques par triangulation. Le moyen de géolocalisation 3 peut présenter une incertitude de positionnement, c'est-à-dire un écart entre les coordonnées géographiques qu'il fournit et les coordonnées géographiques réelles du véhicule. L'incertitude de positionnement peut être comprise entre quelques dizaines de centimètres et une dizaine de mètres, par exemple environ 3 mètres. L'incertitude de positionnement peut être dépendante des conditions de réception des signaux émis par les satellites. En particulier, la présence de reliefs autours du véhicule peut engendrer des réflexions qui dégradent la précision des coordonnées géographiques fournies par le moyen de géolocalisation 3.

Le véhicule 1 comprend aussi une interface 4 de communication apte à transmettre des informations à un utilisateur du véhicule. L'interface 4 est notamment apte à afficher des messages et/ou apte à émettre des sons et/ou apte à générer toute autre forme de stimuli adapté pour attirer l'attention de l'utilisateur. L'interface 4 peut être intégrée à une planche de bord du véhicule. Alternativement ou en complément, le véhicule 1 peut comprendre des moyens de contrôle 5 aptes à contrôler automatiquement la trajectoire et/ou la vitesse du véhicule.

Enfin, le véhicule 1 comprend une unité de contrôle électronique 6. L'unité de contrôle électronique 6 est connectée au moyen d'observation 2, au moyen de géolocalisation 3, et le cas échéant à l'interface 4 et/ou aux moyens de contrôle 5. En particulier, l'unité de contrôle électronique 6 est configurée pour recevoir des signaux numériques fournis par le moyen d'observation 2 et par le moyen de géolocalisation 3. L'unité de contrôle électronique 6 est également configurée pour émettre des signaux numériques à destination de l'interface 4 et/ou des moyens de contrôle 5.

L'unité de contrôle électronique 6 comprend un module d'interprétation 61 apte à interpréter une image et/ou un signal vidéo fourni par le moyen d'observation 2. Le module d'interprétation 61 peut comprendre des moyens de reconnaissance optique adaptés pour identifier différents repères statiques ou dynamiques. Le module d'interprétation 61 peut notamment être configuré pour identifier d'autres véhicules présents dans le champ d'observation du moyen d'observation 2. Le module d'interprétation 61 peut également être configuré pour identifier des premiers repères statiques parmi lesquels des éléments d'accotement tels que des limites de revêtement, des lignes de démarcation peintes sur le sol, des rambardes, des glissières de sécurité, des barrières, des talus ou encore des terrepleins, et les chaussées des routes. Le module d'interprétation 61 peut également être configuré pour identifier des éléments de signalisation. Les éléments de signalisation peuvent comprendre des motifs peints sur le sol et/ou des panneaux de signalisation. Les panneaux de signalisation peuvent être, par exemple, des panneaux d'interdiction ou des panneaux directionnels. Enfin, le module d'interprétation 61 peut également être configuré pour identifier des bâtiments apparaissant dans le champ de vision du moyen d'observation 2, par exemple des ponts, des poteaux ou des maisons. Plus généralement, lorsque le moyen d'observation 2 comprend un radar ou un lidar, le module d'interprétation 61 peut être configuré pour identifier tout objet dans un nuage de points lidar ou un ensemble d'échos radar.

En particulier, le module d'interprétation 61 est configuré pour identifier des panneaux de sens interdit. Un panneau de sens interdit comprend généralement une forme circulaire, un fond rouge, et une bande horizontale blanche recouvrant le fond rouge.

L'unité de contrôle électronique 6 comprend aussi une mémoire 62. La mémoire 62 contient des données cartographiques 63 sous forme numérique. Les données cartographiques 63 peuvent, par exemple, contenir des cartes vectorielles et/ou des cartes matricielles représentatives d'une infrastructure routière. Les données cartographiques 63 peuvent contenir la définition de l'ensemble des routes carrossables sur un territoire donné, par exemple à l'échelle d'un pays. Chaque route carrossable peut être définie par des coordonnées géographiques mais également par sa nature, par exemple son type de revêtement, son nombre de voies de circulation, ou encore sa dénomination. Les données cartographiques 63 peuvent également contenir un ensemble de seconds repères positionnés aux abords de chaque route. Ces seconds repères sont analogues aux premiers repères décrits précédemment. En particulier, les seconds repères peuvent comprendre des éléments d'accotement tels que des limites de revêtement, des lignes de démarcation peintes sur le sol, des rambardes, des glissières de sécurité, des barrières ou encore des terrepleins. Les seconds repères peuvent également comprendre des éléments de signalisation. Les éléments de signalisation peuvent comprendre des motifs peints sur le sol et/ou des panneau de signalisation, par exemple des panneaux d'interdiction ou des panneaux directionnels, notamment des panneaux de sens interdit. Les seconds repères peuvent également comprendre des bâtiments tels que des ponts ou des maisons. Pour chaque second repère, les données cartographiques 63 comprennent au moins une information relative à la nature du second repère et une information relative à la position du second repère considéré, par exemple ses coordonnées géographiques.

Les seconds repères sont donc des repères statiques, contrairement par exemple à des véhicules automobiles dont la position peut bien sûr changer rapidement.

Par « premiers repères », on désigne donc des repères statiques identifiés avec le moyen d'observation 2. Par « seconds repères », on désigne des repères statiques répertoriés dans la données cartographiques 63 enregistrés dans la mémoire 62. D'une manière générale, les termes d'énumération tels que « premiers » et « deuxièmes » visent uniquement à distinguer différents repères et ne caractérisent aucune propriété intrinsèque à ces repères ou une relation de préférence entre ces repères.

En remarque, l'ensemble des données cartographiques n'est pas nécessairement stocké dans la mémoire 62 de l'unité de contrôle électronique 6. Selon un mode de réalisation, l'unité de contrôle électronique 6 comprend des moyens de communications sans fil permettant de charger les données cartographiques en fonction de la position courante du véhicule. Les données cartographiques peuvent ainsi comprendre des données particulières détaillées et actuelles concernant l'ensemble des seconds repères situés dans l'environnement du véhicule.

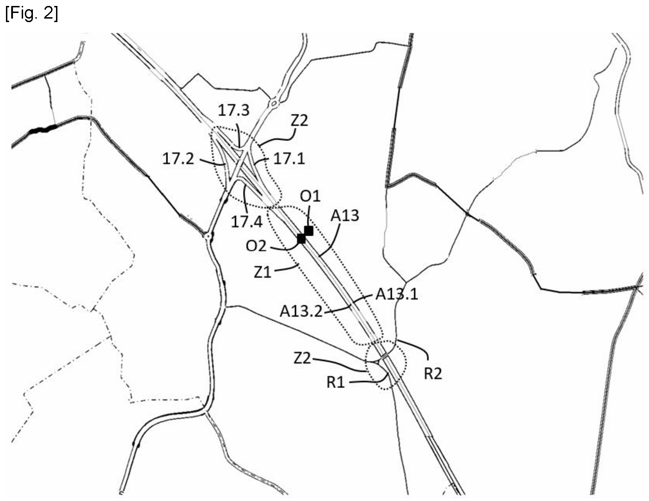

La figure 2 illustre une représentation graphique d'une partie des données cartographiques 63. Les données cartographiques comprennent différents types de route, par exemple des autoroutes, des routes nationales, des routes départementales ou encore des routes communales. Chaque route peut être une route à double sens ou une route à sens unique. Lorsqu'une route est une route à sens unique, elle comprend une unique chaussée sur laquelle les véhicules sont destinés à circuler dans le même sens. Lorsqu'une route est une route à double sens, elle comprend deux chaussées sur lesquelles les véhicules sont destinés à circuler dans des sens opposés. Dans ce cas, les deux chaussées peuvent être séparées par un terreplein central, une rambarde ou encore une simple ligne de démarcation, par exemple une ligne pointillée ou une ligne continue, voire n'être séparées par aucun élément de signalisation. Chaque chaussée peut comprendre une ou plusieurs voies de circulation. Avantageusement, les données cartographiques 63 contiennent également une information relative au sens de circulation théorique de chaque chaussée. Ce sens de circulation théorique est le sens de circulation pour lequel la chaussée est prévue. Si un véhicule emprunte une chaussée dans le sens inverse du sens de circulation théorique, il circule à contresens et s'expose à un risque de choc frontal avec un autre automobiliste.

Selon l'exemple de la figure 2, les données cartographiques 63 comprennent une autoroute A13, à double sens. L'autoroute A13 comprend deux chaussées A13.1 et A13.2 correspondants à deux sens de circulation opposés. Les deux chaussées A13.1 et A13.2 sont séparées par un terreplein central, et comprennent chacune au moins deux voies de circulation. Les données cartographiques 63 comprennent également une première voie de sortie 17.1 permettant à un véhicule de quitter l'autoroute A13 lorsqu'il circule dans un premier sens sur l'autoroute A13, et une deuxième voie de sortie 17.2 permettant à un véhicule de quitter l'autoroute A13 lorsqu'il circule dans un deuxième sens sur l'autoroute A13. Les données cartographiques 63 comprennent également une première voie d'insertion 17.3 permettant à un véhicule d'emprunter l'autoroute A13 dans le premier sens, et une deuxième d'insertion 17.4 permettant à un véhicule d'emprunter l'autoroute A13 dans le deuxième sens. Les voies de sortie 17.1, 17.2 et les voies d'insertion 17.3 et 17.4 sont des routes à sens unique. L'ensemble des voies 17.1, 17.2, 17.3 et 17.4 forment un échangeur autoroutier. Un tel échangeur est une zone particulièrement sensible car si un automobiliste emprunte l'une des voies 17.1 ou 17.2 à contresens, il risque ensuite de se retrouver sur l'autoroute A13 à contresens. Par ailleurs, une première route R1 à double sens longe localement l'autoroute A13. Une deuxième route R2 à double sens passe au-dessus de l'autoroute A13 et intersecte la première route R1 à proximité de l'autoroute A13. En outre, deux seconds repères, notamment des panneaux de sens interdits O1, O2 sont représentés schématiquement sur un bord de la chaussée 13.1.

L'unité de contrôle électronique 6 comprend en outre un module de positionnement 66, que l'on pourrait également dénommer avec l'anglicisme module de « map matching ». Le module de positionnement 66 est configuré pour calculer une position estimée du véhicule en fonction des coordonnées géographiques fournies par le moyen de géolocalisation 3 et en fonction des données cartographiques 63. En particulier, le module de positionnement 66 calcule ladite position estimée par une projection des coordonnées géographiques fournies par le moyen de géolocalisation 3 sur la chaussée la plus proche des coordonnées géographiques fournies par le moyen de positionnement et dont le sens de circulation théorique correspond au sens de circulation effectif du véhicule. Cette projection peut comprendre l'identification d'un point de ladite chaussée pour lequel la distance avec les coordonnées géographiques fournies par le moyen de positionnement est la plus faible. Le sens de circulation effectif peut être calculé par le module de positionnement 62 en considérant au moins deux coordonnées géographiques successives fournies par le moyen de géolocalisation 3 et/ou au moyen d'un capteur d'accélération et/ou au moyen d'une centrale inertielle et/ou au moyen de tout autre capteur équivalent embarqué dans le véhicule. Le sens de circulation théorique fait partie des données cartographiques comme expliqué précédemment. Par construction, la position estimée calculée par le module de positionnement 66 est donc toujours une position dans laquelle le véhicule 1 circule dans le bon sens de circulation, c'est-à-dire pas à contresens. La position estimée ne peut donc pas être utilisée directement pour déterminer si le véhicule 1 circule à contresens. Par mémoire 62 on comprend donc également une mémoire de type mémoire vive et/ou de type mémoire volatile. Les données cartographiques peuvent être mémorisées temporairement dans la mémoire 62 pour la mise en œuvre du procédé de détection selon l'invention puis être effacées dès que la mémoire n'est plus sous tension.

La mémoire 62 contient également un programme informatique 64 contenant des instructions de code de programme de mise en œuvre d'un procédé de détection d'un état de circulation à contresens du véhicule 1 selon un mode de réalisation de l'invention. L'unité de contrôle électronique 6 comprend un microprocesseur 65 apte à exécuter ce programme d'ordinateur.

En remarque, le module d'interprétation 61, la mémoire 62, les données cartographiques 63, le programme informatique 64, le microprocesseur 65 et le module de positionnement 66 sont, selon le mode de réalisation présenté, intégrés à une même unité de contrôle électronique 6. Selon d'autres variantes de réalisation, une partie de ces éléments pourrait être intégrée dans une ou plusieurs unités de contrôle électronique secondaires, embarquées dans le véhicule 1, et connectées à l'unité de contrôle électronique 6. Par exemple, le module de positionnement 66 pourrait être intégré à un système de géolocalisation auquel l'unité de contrôle électronique 6 est connectée. Tout ou partie des moyens logiciels, notamment le module d'interprétation 61, les données cartographiques 63, le programme informatique 64 ou encore le module de positionnement 66 pourraient aussi être partiellement ou complètement externalisés sur un serveur distant auquel le véhicule 1 est connecté.

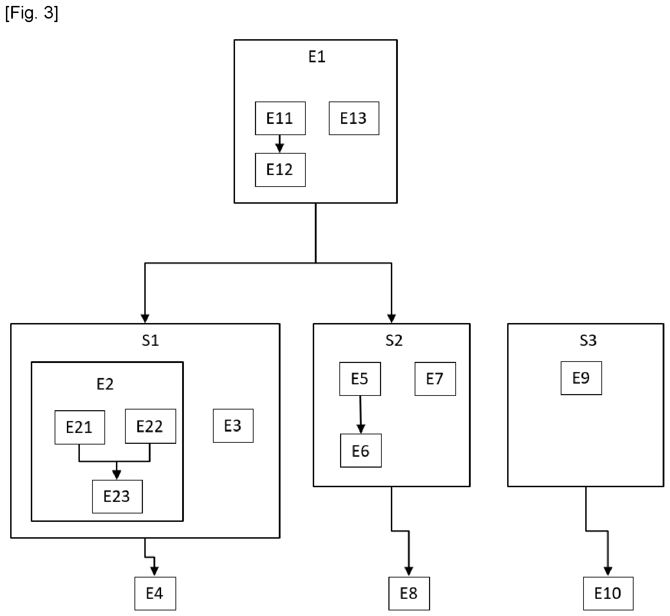

On décrit à présent un mode de réalisation d'un procédé de détection d'un état de circulation à contresens du véhicule 1 en relation avec le logigramme illustré sur la figure 3. Le procédé est mis en œuvre alors que le véhicule 1 est en train de circuler sur une route, par exemple l'une quelconque des routes illustrées sur la figure 2. Le procédé de détection peut être répété indéfiniment tant que le véhicule est en cours d'utilisation.

Le procédé comprend tout d'abord une première étape E1 de qualification d'une configuration routière courante parmi un ensemble de configurations routières potentielles. Comme nous allons le voir par la suite, ceci permet d'envisager différents types de stratégies, chaque stratégie étant adaptée à une configuration donnée. Selon le mode de réalisation présenté, ledit ensemble de configurations routières comprend trois configurations routières potentielles : une configuration routière simple, une configuration routière complexe, et une configuration routière urbaine. Selon une variante de réalisation de l'invention, l'ensemble des configurations routières potentielles pourrait comprendre seulement la configuration routière simple et la configuration routière complexe. Selon une autre variante, l'ensemble des configurations routières potentielles pourrait comprendre plus de trois configurations potentielles, par exemple quatre, cinq ou six configurations potentielles. Une configuration routière « de travaux » correspondant à une zone de travaux pourrait par exemple être définie.

Une configuration routière simple peut être définie comme une configuration routière dans laquelle une zone prédéfinie autour du véhicule présente peu d'ambiguïtés relatives au positionnement du véhicule. Cela correspond au cas où, dans un rayon supérieur à la marge d'erreur maximale du système de positionnement, aucune autre route n'est présente, au sens de circulation près. C'est le cas par exemple lorsque la zone prédéfinie comprend une unique route à double sens ou à sens unique. Ladite zone peut être, par exemple, une zone circulaire dont le rayon est égal à une valeur donnée, par exemple une valeur comprise entre 100 mètres et 500 mètres.

Une configuration routière complexe peut être définie comme une configuration routière dans laquelle la zone prédéfinie autour du véhicule présente des ambiguïtés relatives au positionnement du véhicule, c'est-à-dire plusieurs routes où le véhicule serait susceptible de se trouver. C'est le cas par exemple en présence d'au moins une première route à sens unique ou à double sens et une deuxième route à sens unique ou à double sens, la deuxième route étant distincte de la première route. Autrement dit, une configuration routière complexe est une configuration dans laquelle **il** existe au moins une deuxième route à proximité de la route sur laquelle circule le véhicule. Un nœud autoroutier, un carrefour, ou encore un rond-point peuvent être qualifiés de configurations routières complexes.

Une configuration urbaine peut être définie comme une configuration routière dans laquelle la zone prédéfinie autour du véhicule se situe à l'intérieur d'une ville. Alternativement ou en complément, une configuration urbaine peut être définie comme une configuration routière dans laquelle la zone prédéfinie autour du véhicule possède une limitation de vitesse à 50km/h ou moins, ou encore dans laquelle la zone prédéfinie autour du véhicule comprend un nombre important de routes distinctes, par exemple au moins 5 routes distinctes.

Selon un mode de réalisation de l'invention, les données cartographiques 63 contenues dans la mémoire 62 comprennent un premier ensemble de zones géographiques Z1 prédéfinies correspondant à des configurations routières simples, et un deuxième ensemble de zones géographiques Z2 prédéfinies correspondant à des configurations routières complexes. Ces zones peuvent être prédéfinies lors d'une phase préalable de préparation des données cartographiques 63, avant que celles-ci ne soient enregistrées dans la mémoire 62. La figure 2 illustre à titre d'exemple une zone Z1 correspondant à une configuration routière simple et deux zones Z2 correspondant à des configurations routières complexes. Les zones du premier ensemble de zones géographiques Z1 et les zones du deuxième ensemble de zones géographiques Z2 sont distinctes les unes des autres. Ainsi, quelles que soient les coordonnées géographiques considérées, celles-ci ne peuvent pas appartenir à la fois à une zone Z1 et à une zone Z2. Le cas échéant, les données cartographiques 63 contenues dans la mémoire 62 peuvent comprendre un troisième ensemble de zones géographiques Z3 prédéfinies correspondant à des configurations routières urbaines. Les zones Z1, Z2 et Z3 sont alors distinctes les unes des autres.

La première étape E1 peut comprendre tout d'abord une étape E11 de détermination d'une position courante du véhicule. La position courante du véhicule peut être la position correspondant aux coordonnées géographiques fournies par le moyen de géolocalisation 3 ou la position estimée par le module de positionnement 66. Dans tous les cas, la position courante du véhicule est calculée directement ou indirectement avec le moyen de géolocalisation 3. Par exemple, le moyen de géolocalisation 3 émet un signal numérique à l'unité de contrôle électronique 6, le signal numérique contenant des coordonnées géographiques représentatives de la position courante du véhicule 1. Ensuite, la première étape E1 comprend une étape E12 de combinaison de la position courante obtenue lors de l'étape E11 avec les données cartographiques 63. Cette combinaison peut consister en une projection des coordonnées géographiques sur les données cartographiques 63. La combinaison de la position courante du véhicule avec les données cartographiques permet de déterminer dans quel type de zone appartient la position courante du véhicule. La configuration routière courante est alors qualifiée comme une configuration routière simple si la position courante du véhicule appartient à une zone du premier ensemble de zones géographiques Z1. Inversement, la configuration routière courante est qualifiée comme une configuration routière complexe si la position courante du véhicule appartient à une zone du deuxième ensemble de zones géographiques Z2.

Dans l'hypothèse où la position courante du véhicule n'appartiendrait ni au premier ensemble de zones géographiques Z1 ni au deuxième ensemble de zones géographiques Z2, le procédé de détection peut être réinitialisé, c'est-à-dire que la première étape est répétée jusqu'à ce que la position courante du véhicule appartienne à une zone parmi le premier ensemble de zones géographiques Z1 ou le deuxième ensemble de zones géographiques Z2. Dans l'hypothèse où l'ensemble des configurations routières potentielles comprend une configuration routière urbaine, si la position courante du véhicule est qualifiée comme appartenant à une configuration routière urbaine, alors le procédé de détection peut être réinitialisé. En effet, une configuration routière urbaine présente d'une part un risque plus faible car les vitesses des véhicules sont plus basses. D'autre part, une configuration routière urbaine présente généralement une forte complexité et une forte diversité pouvant entraîner de nombreuses alertes de circulation à contresens à mauvais escient. De même, si la position courante du véhicule est qualifiée comme appartenant à une configuration de travaux, l'itération en cours du procédé peut être interrompue et le procédé de détection peut être réinitialisé.

Alternativement ou en complément des étape E11 et E12 précédemment décrites, la première étape E1 peut comprendre une étape E13 de détermination de la configuration routière courante avec ledit moyen d'observation 2. En particulier, si aucune autre route que celle sur laquelle circule le véhicule n'est observée avec le moyen d'observation 2, alors la configuration routière courante peut être qualifiée de simple. Inversement, si le moyen d'observation 2 observe au moins une deuxième route, alors la configuration routière courante peut être qualifiée de complexe. Cette méthode présente l'avantage de ne requérir aucune définition préalable des premières zones et des deuxièmes zones dans les données cartographiques. En revanche, cette méthode peut être moins précise, notamment dans le cas où une deuxième route située à proximité de la route sur laquelle circule le véhicule n'est pas facilement observable avec le moyen d'observation 2.

Selon encore une autre variante de réalisation, alternative ou complémentaire des étapes E11, E12, et E13 décrites précédemment, le type de configuration routière dans lequel se trouve le véhicule peut être déterminé par une analyse des données cartographiques 63. En particulier, on peut projeter la position courante du véhicule sur les données cartographiques. Ensuite, on peut définir une zone d'intérêt autour de la position projetée. La zone d'intérêt peut être une zone circulaire avec un rayon de valeur prédéfinie. Ensuite on peut analyser les données cartographiques 63 pour comptabiliser le nombre de routes présentes dans la zone d'intérêt.

A l'issue de la première étape E1, la configuration routière courante dans laquelle se trouve le véhicule 1 est donc déterminée.

Ensuite, si lors de la première étape E1 la configuration routière courante est qualifiée comme une configuration routière simple, on applique une première stratégie de détection S1. La première stratégie de détection S1 comprend deux tests réalisés indépendamment l'un de l'autre. La réussite de l'un de ces deux tests suffit à confirmer un état de circulation à contresens du véhicule 1.

Un premier test est réalisé lors d'une deuxième étape E2. Dans la deuxième étape E2, on contrôle une cohérence entre d'une part des premiers repères statiques identifiés avec le moyen d'observation 2 et d'autre part des seconds repères statiques répertoriés dans les données cartographiques 63 autour d'une position estimée du véhicule, la position estimée étant fournie par le module de positionnement 66.

Plus précisément, selon un mode de réalisation de l'invention, la deuxième étape E2 comprend une étape E21 d'identification d'au moins un premier repère avec le moyen d'observation 2. La nature de ce repère peut être identifié par le module d'interprétation 61. Comme expliqué précédemment, un premier repère peut être, par exemple, un panneau de signalisation, et/ou un bâtiment, et/ou un élément d'accotement tel qu'une ligne de démarcation, une rambarde, une glissière une barrière ou un terreplein.

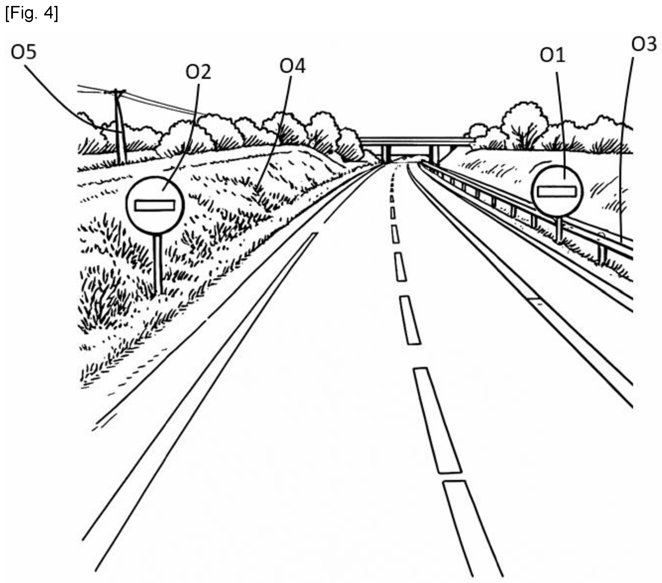

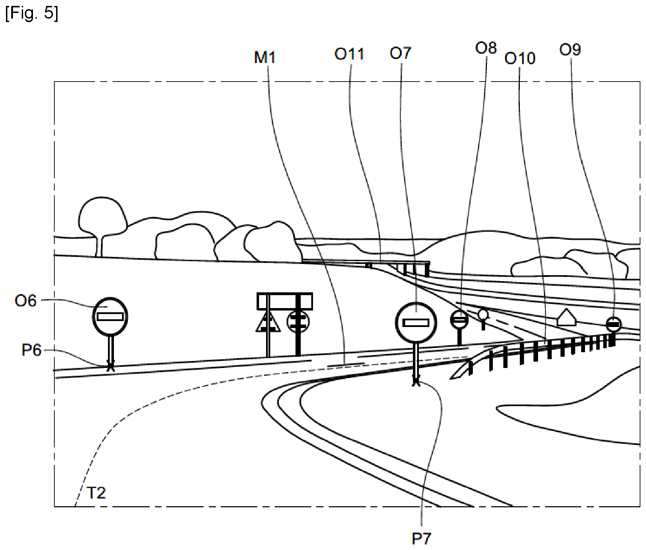

Par exemple, dans l'hypothèse où le moyen d'observation 2 produit une image telle qu'illustrée sur la figure 4, l'unité de contrôle électronique 6 peut identifier un premier panneau de sens interdit O1 sur le côté droit de l'image, un deuxième panneau de sens interdit O2 sur le côté gauche de l'image, une glissière de sécurité O3 sur le côté droit de l'image, un terreplein O4 et un poteau O5 sur le côté gauche de l'image. Dans l'hypothèse où le moyen d'observation 2 produit une image telle qu'illustrée sur la figure 5, l'unité de contrôle électronique 6 peut identifier quatre panneaux de sens interdit O6, O7, O8, O9, une glissière de sécurité O10 ou encore un pont O11.

Parallèlement à l'étape E21, la deuxième étape E2 comprend une étape E22 d'identification d'au moins un second repère au moyen des données cartographiques. Cette étape est exécutée en supposant que le véhicule 1 circule selon un sens de circulation correct (c'est-à-dire pas à contresens). A cette fin, on utilise la position estimée du véhicule calculée par le module de positionnement 66. Lors de cette étape, le moyen de géolocalisation 3 peut fournir au module de positionnement 66 les coordonnées géographiques correspondant à la position courante du véhicule. En particulier Le sens de circulation effectif du véhicule peut être déterminé en considérant au moins deux coordonnées géographiques successives fournies par le moyen de géolocalisation 3 et/ou au moyen d'un capteur d'accélération et/ou au moyen d'une centrale inertielle et/ou au moyen de tout autre capteur équivalent embarqué dans le véhicule. La chaussée figurant dans les donnes cartographiques 63 dont la position est la plus proche des coordonnées géographiques et dont le sens de circulation théorique correspond au sens de circulation effectif du véhicule peut être identifiée.

Une fois que cette chaussée est identifiée, on projette les coordonnées géographiques sur cette chaussée. On calcule ainsi une position estimée du véhicule. Ensuite, on détermine les seconds repères répertoriés dans les données cartographiques 63 positionnés à l'avant de la position estimée du véhicule. Si l'hypothèse selon laquelle le véhicule circule dans le sens de circulation correct est juste, les seconds repères précédemment déterminés seront également observables avec le moyen d'observation embarqué dans le véhicule.

Lors d'une étape E23, on compare les premiers repères identifiés lors de l'étape E21 avec les seconds repères identifiés lors de l'étape étape E22, et on en déduit s'il y a une incohérence entre ces repères. Par exemple, si un premier repère est identifié avec le moyen d'observation 2 et qu'aucun second repère de même nature que le premier repère n'est identifié dans les données cartographiques, on peut conclure à une première incohérence. Inversement, si un second repère est identifié dans les données cartographiques et qu'aucun premier repère de même nature que le second repère n'est identifié avec le moyen d'observation 2, on peut conclure à une deuxième incohérence.

On peut ainsi calculer un score d'incohérence. Ce score d'incohérence peut être incrémenté à chaque fois qu'une incohérence est détectée, et décrémenté progressivement avec le temps. Si le score d'incohérence atteint une valeur seuil, alors ceci pourra être dû au fait que l'hypothèse selon laquelle le véhicule circule selon un sens de circulation correct n'était pas juste. Si cette hypothèse est fausse, on en déduit que le véhicule circule à contresens puisque ce test est exécuté dans le cadre d'une configuration simple dans laquelle il n'y a qu'une seule route.

Avantageusement lors des étapes E21 et E22, on peut également déterminer une position relative des premiers repères et des seconds repères relativement au véhicule. Par exemple lors de l'étape E21, on peut déterminer pour chaque repère détecté si ce repère apparait du côté gauche ou du côté droit des données transmises par le moyen d'observation 2. De même, lors de l'étape E22, on peut déterminer au moyen des données cartographiques 63, si chaque second repère est supposé apparaitre du côté gauche ou du côté droit des données fournies par le moyen d'observation 2. Ces informations de position relatives des premiers et seconds repères permettent de rendre le test encore plus précis : une incohérence pourra être relevée si la position du premier repère relativement au véhicule est différente de la position du second repère relativement au véhicule.

En remarque, le côté gauche et le côté droit peuvent être définis selon le point de vue d'un conducteur du véhicule. La trajectoire du véhicule peut délimiter un côté droit d'un côté gauche du véhicule. La trajectoire du véhicule peut être une ligne virtuelle s'étendant vers l'avant et passant par le centre du véhicule. Cette ligne peut être rectiligne lorsque le véhicule avance en ligne droite ou, au contraire, être courbée lorsque le véhicule est dans un virage. La trajectoire du véhicule peut être définie comme une ligne médiane s'étendant entre deux lignes de démarcation délimitant la voie de circulation sur laquelle circule le véhicule. Alternativement, la trajectoire du véhicule peut être fournie par un module de calcul de trajectoire du véhicule.

Avantageusement, les panneaux de signalisation comprennent une unique face imprimée. Le dos d'un panneau de signalisation est généralement non imprimé. Lorsqu'un véhicule circule à contresens, il ne peut en aucun cas interpréter un panneau de signalisation avec un moyen d'observation configuré pour observer la scène à l'avant du véhicule. Un tel panneau se présentant à l'envers ne pourra donc pas être identifié lors de l'étape E21. Si le véhicule circule à contresens, chaque panneau rencontré par le véhicule génèrera ainsi une incohérence telle que définie précédemment et participera à l'incrémentation du score d'incohérence.

Un deuxième test est réalisé lors d'une troisième étape E3. Le deuxième test est réalisé indépendamment du premier test. Le deuxième test présente l'avantage d'être indépendant de toute donnée cartographique. Le procédé de détection peut donc rester opérationnel lorsque le véhicule circule dans des régions pour lesquelles il ne dispose d'aucune donnée cartographique ou de données cartographiques insuffisamment précises. Dans la troisième étape E3, on contrôle avec le moyen d'observation 2 la présence d'un premier panneau de sens interdit et d'un deuxième panneau de sens interdit de part et d'autre de la chaussée sur laquelle circule le véhicule. Autrement dit, on contrôle la présence d'un premier panneau de sens interdit à gauche de la chaussée sur laquelle circule le véhicule et d'un second panneau de sens interdit à droite de la chaussée sur laquelle circule le véhicule.

Avantageusement, la détection d'un unique panneau de sens interdit à droite ou gauche de la trajectoire du véhicule ne suffit pas à rendre le deuxième test positif. Ceci permet d'éviter un grand nombre de fausses détections car il arrive fréquemment qu'un panneau de sens interdit soit observable par un moyen d'observation alors qu'il concerne des automobilistes situés sur d'autres routes ou d'autres chaussées que celle sur laquelle circule le véhicule.

En particulier, lors de la troisième étape E3, le module d'interprétation 61 peut détecter la présence d'un premier panneau d'interdiction et d'un deuxième panneau d'interdiction sur une image fournie par le moyen d'observation 2. La trajectoire du véhicule peut être positionnée sur ladite image. Ensuite, on peut détecter que le premier panneau d'interdiction et que le deuxième panneau d'interdiction se trouvent de part et d'autre de la chaussée sur laquelle circule le véhicule.

Sur la figure 4, la trajectoire T1 du véhicule est illustrée avec des pointillés. Les panneaux de sens interdit O1 et O2 se trouvent de part et d'autre de la trajectoire T1. L'exécution du deuxième test dans la configuration de la figure 4 conduira à détecter un état de circulation à contresens.

Avantageusement, le module d'interprétation peut être également apte à détecter un point d'ancrage d'un panneau de sens interdit dans le sol. Dans ce cas, le deuxième test peut prendre en compte ce point d'ancrage pour déterminer de quel côté de la trajectoire du véhicule le panneau de sens interdit se situe. Sur la figure 5, la trajectoire T2 du véhicule est illustrée avec des pointillés. Les points d'ancrage P6 et P7 des panneaux de sens interdit O6 et O7 se trouvent de part et d'autre de la trajectoire T2. Ce perfectionnement du deuxième test permet de détecter un état de circulation à contresens dans la configuration de la figure 5. En remarque, quand bien même le module d'interprétation ne serait pas apte à détecter les points d'ancrage des panneaux de sens interdit O6 et O7, la configuration illustrée sur la figure 5 conduirait tout de même à un deuxième test positif à un instant ultérieur à celui de la figure 5, le véhicule sera plus avancé dans le virage vers la droite et le disque du panneau de sens interdit O7 apparaitra bel et bien du côté droit de la trajectoire T2.

Ensuite, si une incohérence entre les premiers repères et les données cartographiques est détectée ou si la présence d'un premier panneau de sens interdit et d'un deuxième panneau de sens interdit de part et d'autre de la chaussée sur laquelle circule le véhicule est détectée, on procède à une quatrième étape E4 de signalisation d'un état de circulation à contresens du véhicule 1. Le succès de l'un des deux tests suffit pour déclencher la quatrième étape E4. Lors de la quatrième étape E4, un signal peut être émis par l'unité de contrôle électronique 6 à l'interface 4 et/ou aux moyens de contrôle 5. En particulier, un message d'alerte peut être affiché sur un écran et/ou un son peut être produit pour alerter le conducteur du véhicule d'un danger imminent. Alternativement ou en complément, les moyens de contrôle peuvent freiner le véhicule et/ou modifier sa trajectoire pour réduire le risque d'une collision frontale.

Si lors de la première étape **E1** la configuration routière courante est qualifiée comme une configuration routière complexe, on applique une deuxième stratégie de détection S2, différente de la première stratégie S1. La deuxième stratégie de détection comprend également deux tests : un troisième test et un quatrième test. Le troisième test et le quatrième test sont réalisés indépendamment l'un de l'autre. La réussite de l'un de ces deux tests suffirait à confirmer un état de circulation à contresens.

Le troisième test est réalisé lors d'une cinquième étape E5 et d'une sixième étape E6. Dans la cinquième étape E5, on détermine la chaussée la plus proche de coordonnées géographiques fournies par le moyen de géolocalisation 3. Comme expliqué précédemment, par « chaussée » on comprend l'ensemble des voies de circulation d'une route ayant le même sens de circulation théorique. Une route à double sens comprend donc deux chaussées. Une route à sens unique comprend une unique chaussée.

En particulier, lors de la cinquième étape E5, on peut avantageusement combiner des coordonnées géographiques fournies par le moyen de géolocalisation 3 avec les données cartographiques 63. Selon un mode de réalisation, on identifie parmi l'ensemble des chaussées répertoriées dans les données cartographiques la chaussée pour laquelle la distance avec lesdites coordonnées géographiques est la plus faible. Lors de cette cinquième étape, on utilise directement les coordonnées géographiques fournies par le moyen de géolocalisation, et non la position estimée calculée par le module de positionnement 66. Comme cela est illustré sur la figure 1, le microprocesseur 65 est donc destiné à recevoir d'une part une position calculée par le module de positionnement 66 pour effectuer le test correspondant à la deuxième étape E2, et d'autre part une position brute, correspondant aux coordonnées géographiques telles que fournies par le moyen de géolocalisation 3 pour effectuer le test correspondant à la cinquième étape E5

Si les coordonnées géographiques appartiennent à une chaussée donnée, dans ce cas, la distance avec cette chaussée est nulle et cette chaussée est directement considérée comme la plus proche des coordonnées géographiques. Si les coordonnées géographiques n'appartiennent à aucune chaussée, on cherche la chaussée pour laquelle la distance entre les coordonnées géographiques et la chaussée est la plus faible. A cette fin la chaussée peut être assimilée à une ligne et les coordonnées géographiques peuvent être assimilées à un point. On applique ensuite une méthode de calcul d'une distance entre une ligne et un point.

Avantageusement, la détermination de la chaussée la plus proche peut être réalisée à l'aide de plusieurs coordonnées géographiques successives fournies par le moyen de géolocalisation. Ceci permet de fiabiliser la détermination de la chaussée. La chaussée la plus proche peut être déterminée, par exemple, par la méthode des moindres carrés.

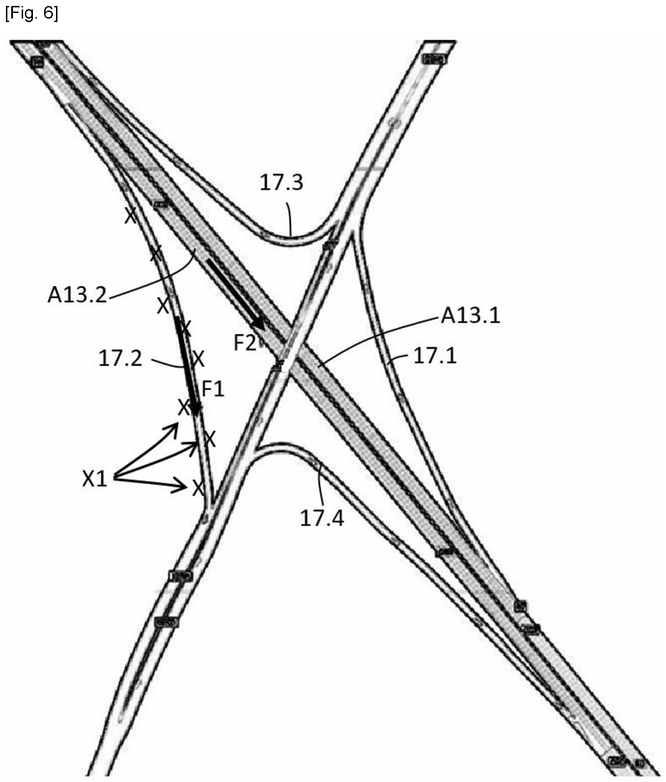

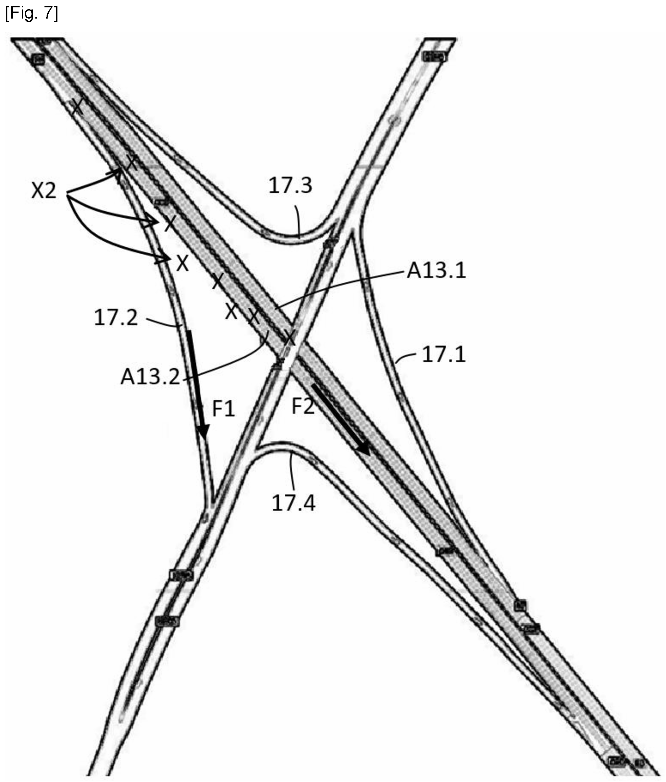

Sur les figures 6 et 7, on a représenté plus en détail le nœud autoroutier comprenant l'autoroute A13, les voies 17.1, 17.2, 17.3 et 17.4 et les chaussées A13.1 et A13.2. Les voies 17.1, 17.2, 17.3 et 17.4 étant à sens unique, elles peuvent être considérées comme des chaussées. Sur la figure 6, on a représenté avec un premier ensemble de croix X1 différentes coordonnées géographiques successives fournies par le moyen de géolocalisation 3. La mise en oeuvre de la cinquième étape E5 telle que décrite précédemment conduirait à déterminer la voie 17.2 ou chaussée 17.2 comme la plus proche des coordonnées géographiques fournies par le moyen de géolocalisation. Sur la figure 7, on a représenté avec un ensemble de croix X2 différentes coordonnées géographiques successives fournies par le moyen de géolocalisation 3. La mise en œuvre de la cinquième étape E5 telle que décrite précédemment conduirait à déterminer la chaussée A13.2 comme la plus proche des coordonnées géographiques fournies par le moyen de géolocalisation.

Dans la sixième étape E6, on contrôle la cohérence entre d'une part un sens de circulation théorique de la chaussée fourni par les données cartographiques 63, et d'autre part un sens de circulation effectif du véhicule déterminé en considérant au moins deux coordonnées géographiques successives fournies par le moyen de géolocalisation 3 et/ou au moyen d'un capteur d'accélération et/ou au moyen d'une centrale inertielle et/ou au moyen de tout autre capteur équivalent embarqué dans le véhicule. Selon les exemples illustrés sur les figures 6 et 7, les sens de circulation théoriques des chaussées 17.2 et A13.2 sont illustrés respectivement par des vecteurs F1 et F2. Comme expliqué précédemment, le sens de circulation théorique de chaque chaussée fait avantageusement partie des données cartographiques 63 enregistrées dans la mémoire 62. Le sens de circulation effectif peut être déterminé en calculant au moins un vecteur défini par au moins deux coordonnées géographiques successives fournies par le moyen de géolocalisation 3. Avantageusement, ces deux positions successives sont suffisamment espacées temporellement pour que l'incertitude de mesure du moyen de géolocalisation ne biaise pas le calcul du sens de circulation effectif. Ensuite, pour contrôler la cohérence entre le sens de circulation théorique et le sens de circulation effectif. On peut calculer un produit scalaire entre un vecteur correspondant au sens de circulation théorique et un vecteur correspondant au sens de circulation effectif. Si ce produit scalaire est négatif alors un état de conduite à contresens est détecté.

Le quatrième test est effectué lors d'une septième étape E7. Lors de la septième étape E7, on contrôle avec le moyen d'observation 2 la présence d'un premier panneau de sens interdit et d'un deuxième panneau de sens interdit de part et d'autre de la chaussée sur laquelle circule le véhicule. La septième étape E7 peut être exécutée de manière identique à la troisième étape E3 décrite précédemment. Ainsi la septième étape ne sera pas à nouveau décrite en détail.

Enfin, si une incohérence entre le sens de circulation théorique et le sens de circulation effectif est détectée ou si la présence d'un premier panneau de sens interdit et d'un deuxième panneau de sens interdit de part et d'autre de la chaussée sur laquelle circule le véhicule, on signale un état de circulation à contresens lors d'une huitième étape E8. La huitième étape E8 peut comprendre l'émission d'un signal par l'unité de contrôle électronique à l'interface 4 et/ou aux moyens de contrôle 5. La huitième étape peut être identique à la quatrième étape E4 décrite précédemment ou, au contraire, être différente de la quatrième étape E4. En particulier, le message affiché par l'interface 4 et/ou le son produit par l'interface 4 et/ou le contrôle automatique du véhicule peuvent être adaptés en fonction du test qui a conduit à déclencher la quatrième étape ou la huitième étape.

Selon un mode de réalisation de l'invention, le procédé de détection peut comprendre en outre des tests et/ou stratégies supplémentaires visant à renforcer la sécurité du véhicule. Par exemple, on peut appliquer au moins une troisième stratégie S3 de détection d'un état de circulation à contresens quelle que soit la configuration routière déterminée lors de la première étape E1. La troisième stratégie S3 peut comprendre une étape E9 de contrôle de la présence d'un marquage au sol indiquant un état de circulation à contresens à l'aide du moyen d'observation 2. Par exemple, comme cela est visible sur la figure 5, une flèche M1 pointant dans une direction opposée à la direction dans laquelle se déplace le véhicule est peinte sur le sol, dans la voie de circulation empruntée par le véhicule. La détection de la flèche M1 par le module d'interprétation 61 entraine une étape E10 de signalisation d'un état de circulation à contresens. L'étape E10 peut être analogue aux étapes E4 et/ou E8 décrites précédemment.

Finalement, grâce à l'invention, on dispose d'un procédé de détection d'un état de circulation à contresens simple à mettre en œuvre. Le procédé est basé sur l'utilisation d'un moyen d'observation 2, d'un moyen de géolocalisation 3, et de données cartographiques 63 mémorisées dans la mémoire d'une unité de contrôle électronique. Il s'agit de moyens relativement simples dont la plupart des véhicules sont déjà équipés. En adaptant la stratégie de détection à une configuration routière préalablement qualifiée, on évite les fausses détections et on rend le procédé plus performant. Des accidents graves peuvent ainsi être évités. Le procédé de détection qui vient d'être décrit est particulièrement performant pour détecter des états de circulation à contresens à proximité de voies d'insertion ou de voies de sorties d'autoroutes.

## Revendications

1. Procédé de détection d'un état de circulation à contresens d'un véhicule (1) automobile, le véhicule comprenant :
- un moyen d'observation (2) de l'environnement,
- un moyen de géolocalisation (3) apte à fournir des coordonnées géographiques représentatives d'une position courante du véhicule, et
- un module de positionnement (66) configuré pour calculer une position estimée du véhicule par projection de coordonnées géographiques fournies par le moyen de géolocalisation (3) sur des données cartographiques en supposant que le véhicule circule sur une chaussée et selon un sens de circulation correct, **caractérisé en ce que** le procédé de détection comprend :
• une première étape (E1) de qualification d'une configuration routière courante parmi un ensemble de configurations routières potentielles, l'ensemble des configurations routières potentielles comprenant une configuration routière simple et une configuration routière complexe, puis
• si la configuration routière courante est qualifiée comme une configuration routière simple,
• une deuxième étape (E2) de contrôle de cohérence entre
(a) d'une part des premiers repères identifiés avec le moyen d'observation (2),
(b) et d'autre part des seconds repères répertoriés dans des données cartographiques (63) autour de la position estimée du véhicule, et
• une troisième étape (E3) de contrôle de la présence d'un premier panneau de sens interdit et d'un deuxième panneau de sens interdit de part et d'autre d'une chaussée sur laquelle circule le véhicule avec le moyen d'observation de l'environnement embarqué dans le véhicule, puis
• si une incohérence entre les premiers repères et les seconds repères est détectée ou si la présence d'un premier panneau de sens interdit et d'un deuxième panneau de sens interdit de part et d'autre d'une chaussée sur laquelle circule le véhicule est détectée, une quatrième étape (E4) de signalisation d'un état de circulation à contresens,
• si la configuration routière courante est qualifiée comme une configuration routière complexe,
• une cinquième étape (E5) de détermination d'une chaussée la plus proche de coordonnées géographiques fournies par le moyen de géolocalisation (3), puis une sixième étape (E6) de contrôle de cohérence entre d'une part un sens de circulation théorique de ladite chaussée, le sens de circulation théorique étant répertorié dans les données cartographiques, et d'autre part un sens de circulation effectif du véhicule, et
• une septième étape (E7) de contrôle de la présence d'un premier panneau de sens interdit et d'un deuxième panneau de sens interdit de part et d'autre d'une chaussée sur laquelle circule le véhicule avec le moyen d'observation de l'environnement embarqué dans le véhicule, puis
• si une incohérence entre le sens de circulation théorique et le sens de circulation effectif est détectée ou si la présence d'un premier panneau de sens interdit et d'un deuxième panneau de sens interdit de part et d'autre de la chaussée sur laquelle circule le véhicule est détectée, une huitième étape (E8) de signalisation d'un état de circulation à contresens.

2. Procédé de détection selon la revendication précédente, **caractérisé en ce que** la première étape (E1) comprend :
- une étape (E11) de détermination d'une position courante du véhicule à partir des données fournies par le moyen de géolocalisation (3),
- puis une étape (E12) de projection de la position courante sur les données cartographiques (63), les données cartographiques comprenant un premier ensemble de zones géographiques (Z1) prédéfinies correspondant à des configurations routières simples et un deuxième ensemble de zones géographiques (Z2) prédéfinies correspondant à des configurations routières complexes, le deuxième ensemble de zones géographiques étant distinct du premier ensemble de zones géographiques,
la configuration routière courante étant qualifiée comme une configuration routière simple si la position courante appartient au premier ensemble de zones géographiques et la configuration routière courante étant qualifiée comme une configuration routière complexe si la position courante appartient au deuxième ensemble de zones géographiques.

3. Procédé de détection selon l'une des revendications précédentes, **caractérisé en ce que** la première étape (E1) comprend une étape (E13) de détermination de la configuration routière courante avec ledit moyen d'observation (2) de l'environnement embarqué dans le véhicule.

4. Procédé de détection selon l'une des revendications précédentes, **caractérisé en ce que** :
- la configuration routière courante est qualifiée comme un configuration routière simple si et seulement si une zone prédéfinie autour du véhicule comprend une unique route à sens unique ou à double sens, et/ou
- la configuration routière courante est qualifiée comme un configuration routière complexe seulement si une zone prédéfinie autour du véhicule comprend au moins une première route à sens unique ou à double sens et une deuxième route à sens unique ou à double sens, la deuxième route étant distincte de la première route.

5. Procédé de détection selon l'une des revendications précédentes, **caractérisé en ce que** lesdits premiers repères comprennent des panneaux de signalisation, et/ou des bâtiments, et/ou des éléments d'accotement tels que des lignes de démarcation, des rambardes, des glissières ou des terrepleins.

6. Procédé de détection selon l'une des revendications précédentes, **caractérisé en ce que** ladite deuxième étape (E2) comprend :
- une étape d'identification d'au moins un premier repère avec le moyen d'observation (2) de l'environnement embarqués dans le véhicule, puis
- une étape d'identification d'au moins un second repère avec les données cartographiques (63), puis
- une étape de calcul d'un score d'incohérence, le score d'incohérence étant incrémenté à chaque fois qu'une incohérence entre lesdits premiers repères et lesdits seconds repères est détectée, et décrémenté progressivement avec le temps,
la quatrième étape (E4) de signalisation d'un état de circulation à contresens étant exécutée dès que le score d'incohérence dépasse un seuil prédéfini.

7. Procédé de détection selon l'une des revendications précédentes, **caractérisé en ce que** la cinquième étape (E5) comprend la détermination de premières coordonnées géographiques du véhicule avec le moyen de géolocalisation, puis la détermination d'au moins deuxièmes coordonnées géographiques du véhicule avec le moyen de géolocalisation, puis la détermination de la chaussée la plus proche en fonction des premières coordonnées géographiques et des au moins deuxièmes coordonnées géographiques.

8. Procédé de détection selon l'une des revendications précédentes, **caractérisé en ce que** l'ensemble des configurations routières potentielles comprend une configuration urbaine, et **en ce que** tant que la configuration routière courante est qualifiée comme une configuration urbaine, le procédé de détection est réinitialisé.

9. Procédé de détection selon l'une des revendications précédentes, **caractérisé en ce qu'**il comprend en outre une étape (E9) de contrôle de la présence d'un marquage au sol indiquant un état de circulation à contresens avec le moyen d'observation (2) de l'environnement embarqué dans le véhicule, puis
si un marquage au sol indiquant un état de circulation à contresens est détecté, une étape (E10) de signalisation d'un état de circulation à contresens.

10. Véhicule (1) automobile comprenant :
- un moyen d'observation (2) de l'environnement
- un moyen de géolocalisation (3), et
- une unité de contrôle électronique (6) comprenant des moyens matériels et logiciels (61, 62, 63, 64, 65) adaptés pour mettre en œuvre un procédé de détection selon l'une des revendications précédentes.
